# EUROPÄISCHE PATENTSCHRIFT

(11) **EP 0 359 939 B1**
(45) Veröffentlichungstag und Bekanntmachung des Hinweises auf die Patenterteilung: **08.09.1993**
(21) Anmeldenummer: 89113531.1
(22) Anmeldetag: 22.07.1989
(51) Int. Cl.: F16L 25/00, H01R 13/66, B60G 17/052

(54) **Luftfeder mit einer Vorrichtung zur Leitungsverbindung**
Air spring with a pipe connection system
Ressort à air avec dispositif de fixation à une conduite

(30) Priorität: 20.09.1988 DE 3831859
(43) Veröffentlichungstag der Anmeldung: 28.03.1990
(73) Patentinhaber: Dr.Ing.h.c. F. Porsche Aktiengesellschaft, 70435 Stuttgart (DE)
(72) Erfinder: Seibel, Maximilian, Dipl.-Ing., D-7032 Sindelfingen 6 (DE)

(56) Entgegenhaltungen:
- BE-A- 817 356
- DE-A- 3 609 405
- US-A- 2 137 162
- US-A- 2 776 385
- US-A- 3 001 784
- US-A- 3 777 298

## Beschreibung

Die Erfindung bezieht sich auf eine Luftfeder nach dem Oberbegriff des Anspruchs 1.

Aus der DE-PS 31 12 078 ist eine Steckerverbindung bekannt, wobei in jedem Stecker ein elektrischer und ein optischer Leiter angeordnet ist, die mit Leitern eines weiteren Steckers verbindbar sind. Derartige Steckerverbindungen ermöglichen die Anordnung verschiedener Leiter in einem Steckerelement sowie deren Verbindung.

Aus der DE-A 36 09 405 ist eine elektro-pneumatische Steckverbindung an einem elektrisch ansteuerbaren pneumatischen Bauteil eines Kraftfahrzeuges bekannt. Dieses ist mit elektrischen und mit pneumatischen Eingängen versehen, die mit entsprechenden Versorgungsanschlussen verbindbar sind. An einem Gehäuse ist eine Kupplung vorgesehen, die sämtliche Eingänge aufweist. In einem Stecker sind die Versorgungsanschlüsse vorgesehen, Der Stecker ist mit der Kupplung durch Übereinanderschieben verbindbar.

Der Erfindung liegt die Aufgabe zugrunde, eine Vorrichtung an einer Luftfeder zur Leitungsverbindung zu schaffen, die aus einem einfach herzustellenden Bauteil besteht und eine exakte Verbindung der beiden von außen zugeführten Leitungen gewährleistet.

Diese Aufgabe wird erfindungsgemäß durch die kennzeichnenden Merkmale des Anspruchs 1 gelöst. Weitere vorteilhafte Merkmale beinhalten die Unteransprüche.

Die mit der Erfindung hauptsächlich erzielten Vorteile bestehen darin, daß die Vorrichtung zur Aufnahme der Leitungen aus einem ein Gehäuse umfassendes ortsfestes Anschlußelement besteht, das sämtliche für eine Luftfeder eines Kraftfahrzeugs erforderlichen Zuleitungen sicher aufnimmt. Diese Zuleitungen sind mit Verbindungselementen, wie Stecker und Gewindehülsen, versehen und können in einfacher Weise von Aufnahmen im Gehäuse abgezogen werden, was zu Reparaturzwecken und dergleichen unbedingt erforderlich ist. Das Gehäuse besteht im wesentlichen aus einem kompakten Gußteil und wird mittels einer Gegenplatte an einer Hülse der Luftfeder luftdicht über entsprechende Dichtringe festgesetzt. Durch ein derartiges Gehäuse mit integrierten Anschlüssen entfallen aufwendige einzelne Steckerverbindungen, die relativ aufwendig zu überprüfen und zu montieren sind und im Betrieb nicht immer eine sichere Kontaktierung gewährleisten. Außerdem ist der Teile- und Montageaufwand bei mehreren Steckerverbindungen höher als bei einer Verbindung in einem ortsfesten Gehäuse. Zur Haltesicherung des elektrischen Anschlusses am Gehäuse ist eine Sicherungskappe schwenkbar angelenkt.

Das Gehäuse nach der Erfindung kann vorzugsweise auch aus einem Kunststoff bestehen.

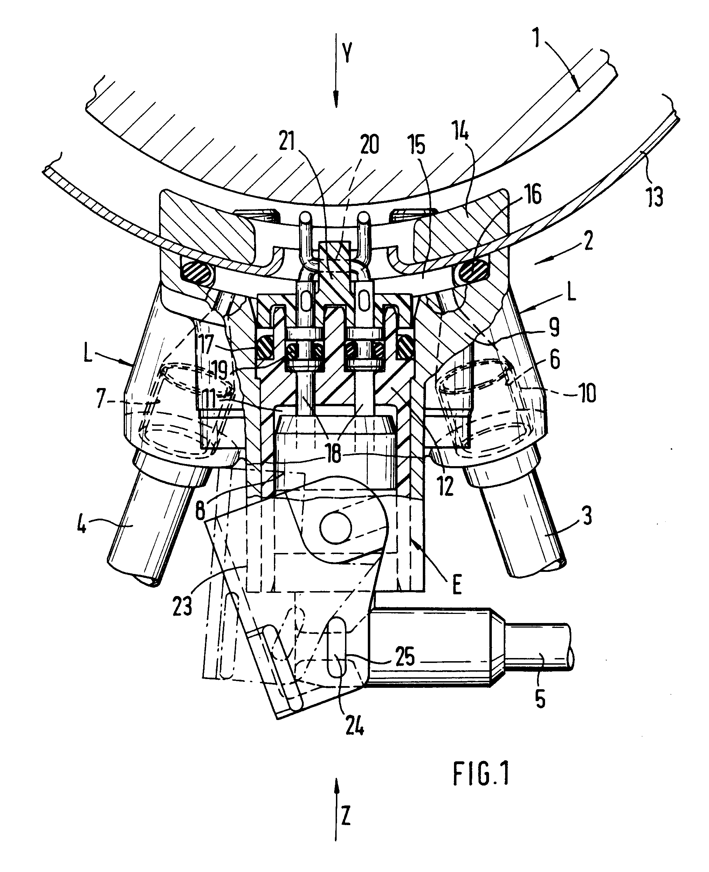

Ein Ausführungsbeispiel der Erfindung ist in der Zeichnung dargestellt und wird im folgenden näher beschrieben. Es zeigen
- Fig. 1: eine Seitenansicht eines an eine Luftfeder angebauten und ein Gehäuse umfassendes Anschlußelement im Schnitt,
- Fig. 2: eine Ansicht auf das Gehäuse in Pfeilrichtung Z gesehen,

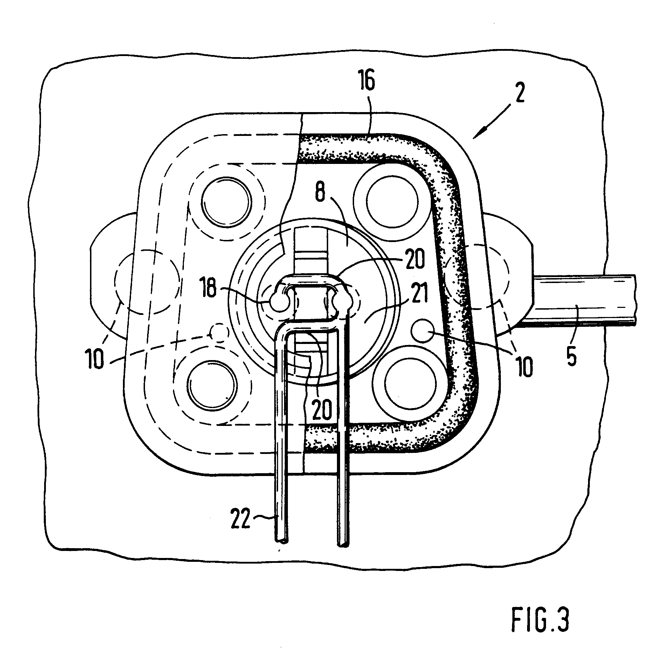

- Fig. 3: eine Ansicht auf das Gehäuse in Pfeilrichtung Y gesehen.

Die Luftfeder 1 für eine Niveauregulierungseinrichtung eines Kraftfahrzeugs weist ein gemeinsames, aus einem Gehäuse 9 bestehendes Anschlußelement 2 für zwei Luftleitungen 3 und 4 und für eine elektrische Zuleitung 5 auf. Diese Leitungen 3, 4 und 5 sind jeweils mit Verbindungselementen 6, 7 und 8 versehen, welche bei den Luftleitungen 3 und 4 aus Einschraubhülsen 6 und 7 und bei der elektrischen Leitung 5 aus einem Stecker 8 bestehen. Zum Anschluß dieser Verbindungselemente weist das Gehäuse 9 entsprechende Gewindebohrungen 10 für die Einschraubhülsen 6 und 7 und eine axiale Durchgangsöffnung 11 zur Aufnahme eines Einsatzteils 12 für den Stecker 8 auf.

Das Gehäuse 9 ist einteilig ausgeführt und wird gegen eine innenseitig an der Hülse 13 der Luftfeder 1 angeordnete Platte 14 über Schrauben festgespannt und über diese an der Hülse 13 gehalten.

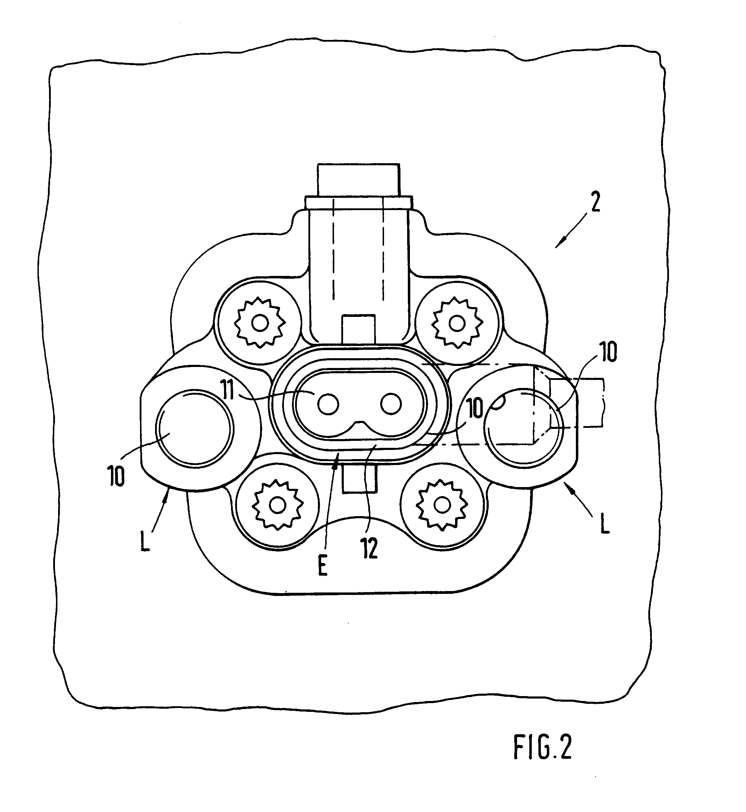

Wie Fig. 2 näher zeigt, ist die Durchgangsöffnung 11 für den elektrischen Anschluß E etwa zentrisch des Gehäuses 9 angeordnet, wogegen die Gewindebohrungen 10 für die Luftleitungen 3 und 4 benachbart dazu beidseitig dieser Durchgangsöffnung 11 und gegenüberliegend im Gehäuse 9 vorgesehen sind.

Die Anschlüsse für die Luftleitungen 3 und 4 sind jeweils beidseitig vorgesehen, damit eine Verwendung für die Räder jeder Fahrzeugseite möglich wird. Hierzu ist jeweils eine Bohrung im Gehäuse durchgängig, wogegen die andere Bohrung geschlossen ist.

Die Gewindebohrungen 10 münden mit einem kleineren Durchmesser in einen Luftsammelraum 15 im Fuß des Gehäuses 9 ein, der über einen an der Hülse 13 anliegenden Dichtring 16 nach außen hin abgeschlossen ist. Ein weiterer Dichtring 17 ist auf dem Einsatzteil 12 für den elektrischen Stecker 8 vorgesehen. Ebenfalls sind zur Verhinderung eines Druckverlustes die elektrischen Kontaktstifte 18 von Dichtringen 19 umgeben.

Das Einsatzteil 12 des Steckers 8 ist am ausgangsseitigen Ende mit einem aufsteckbaren Kabelentlastungselement versehen, das eine quer zum Kontaktstift 18 verlaufende Bohrung 20 aufweist, an der jeweils ein Kabel 22 der elektrischen Leitung 5 labyrinthartig geführt ist.

Der elektrische Stecker 8 ist am Gehäuse 2 über eine schwenkbare Sicherungskappe 23 in seiner eingesteckten Position gehalten. Hierzu sind am Stecker 8 Nasen 24 angeformt, die in Schlitze 25 der Kappe 23 im verrasteten Zustand eingreifen.

## Patentansprüche

1. Luftfeder mit einer Vorrichtung zum lösbaren Verbinden Von Leitungen für eine elektrisch gesteuerte Niveauregulierungseinrichtung eines Kraftfahrzeuges, mit einem aus einem einteiligen Gehäuse (9) bestehenden Anschlußelement (2) mit integrierten Anschlüssen (L und E) für mindestens eine Luftleitung (3 oder 4) und elektrischen Leitungen (5), **dadurch gekennzeichnet,** daß das Gehäuse (9) über eine Halteplatte (14) an der Luftfeder (1) festsetzbar ist und der elektrische Anschluß (E) ein in einer Bohrung (11) des Gehäuses (9) angeordnetes Einsatzteil (12) umfaßt, und zu beiden Seiten des Anschlusses (E) die beiden jeweils eine Durchtrittsbohrung (10) umfassenden Luftanschlüssen (L) im Gehäuse (9) vorgesehen sind und die Anschlüsse (L) der Luftleitungen (3 und 4) in einen Luftsammelraum (15) einmünden, der einerseits gegenüber dem elektrischen Anschluß (E) über einen ersten Dichtring (17) und andererseits über einen zweiten Dichtring (16) abgeschlossen ist und welcher sich an einer Hülse (13) der Luftfeder (1) dichtend abstützt.

2. Luftfeder nach Anspruch 1, **dadurch gekennzeichnet,** daß das Einsatzteil (12) mit einem aufsteckbaren Kabelentlastungselement (21) verbindbar ist, welches quer angeordnete Kerben (20) aufweist, in denen die mit den Kontaktstiften (18) verbundenen Kabel (22) geklemmt und zur Luftfeder geführt werden.

3. Luftfeder nach den Ansprüchen 1 oder 2, **dadurch gekennzeichnet,** daß am Kopf des Gehäuses (9) eine Sicherungskappe (23) für die elektrische Leitung (5) angelenkt ist, die einen Stecker (8) der Leitung (5) übergreift und korrespondierend mit Nasen (24) am Stecker (8) angeordnet ist, schlitzförmige Ausnehmungen (25) aufweist und in diese einrastbar ist.

4. Luftfeder nach Anspruch 1 oder einem oder mehreren der vorhergehenden Ansprüche, **dadurch gekennzeichnet,** daß das Gehäuse (9) und das Einsatzteil (12) zu einem Bauteil zusammengefaßt sind, das aus einem Kunststoff besteht.

5. Luftfeder nach Anspruch 1 oder einem oder mehreren der vorhergehenden Ansprüche, **dadurch gekennzeichnet,** daß nur ein Luftanschluß (L) mit einer Leitung (3 oder 4) eines weiteren Verbindungselements (6 oder 7) in Funktion ist und der weitere Luftanschluß keine geöffnete Durchtrittsbohrung (10) aufweist.

## Claims

1. An air spring with a device for the releasable connexion of ducts for an electrically controlled level-regulating device of a motor vehicle, having a connecting member (2) comprising a one-piece housing (9) and having integrated connexions (L and E) for at least one air duct (3 or 4) and electrical leads (5), **characterized in that** the housing (9) can be secured to the air spring (1) by way of a holding plate (14), and the electrical terminal (E) comprises an insert part (12) arranged in a bore (11) in the housing (9), and on both sides of the terminal (E) the two air connexions (L) each comprising one through bore (10) are provided in the housing (9) and the connexions (L) of the air ducts (3 and 4) open into an air-collection chamber (15) sealed off from the electrical terminal (E) by way of a first sealing ring (17) at one end and by way of a second sealing ring (16) at the other end and supported in a sealed manner on a sleeve (13) of the air spring (1).

2. An air spring according to Claim 1, **characterized in that** the insert part (12) can be connected to an attachable cable-release member (21) having transversely orientated notches (20) in which the cables (22) connected to the contact pins (18) are clamped and are led to the air spring.

3. An air spring according to Claim 1 or 2, **characterized in that** a securing cap (23) for the electrical lead (5) - which engages over a plug (8) of the lead (5), is arranged on the plug (8) so as to correspond with studs (24), has slot-shaped recesses (25) and is engageable therein - is articulated on the head of the housing (9).

4. An air spring according to Claim 1 or one or more of the preceding Claims, **characterized in that** the housing (9) and the insert part (12) are combined to form one component, consisting of plastics material.

5. An air spring according to Claim 1 or one or more of the preceding Claims, **characterized in that** only one air connexion (L) operates with a duct (3 or 4) of a further connecting member (6 or 7), and the further air connexion has no opened through bore (10).

## Revendications

1. Ressort à air avec un dispositif pour son assemblage amovible avec des conduites et de lignes d'un dispositif de régulation de niveau, commandé électriquement, d'un véhicule automobile, comportant un élément de raccord (2), constitué d'un boîtier (9) d'une seule pièce, avec raccords (L et E) intégrés pour au moins une conduite d'air (3 ou 4) et des lignes électriques (5), caractérisé en ce que le boîtier (9) peut être fixé, par une plaque de maintien (14), sur le ressort à air (1) et le branchement électrique (E) comprend un insert (12) monté dans un alésage (11) du boîtier (9), et il est prévu, dans le boîtier (9), des deux côtés du branchement (E) des raccords d'air (L) comprenant tous deux un orifice de passage (10) et en ce que les raccords (L) des conduites d'air (3 et 4) débouchent dans une chambre de collecte d'air (15) qui est fermée d'une part par rapport au branchement électrique (E), par une première bague d'étanchéité (17) et d'autre part par une seconde bague d'étanchéité (16) et qui prend appui, de manière étanche, contre un manchon (13) du ressort à air (1).

2. Ressort à air selon la revendication 1, caractérisé en ce que l'insert (12) peut être relié avec un élément de décharge de câble (21) emboîtable, qui présente des encoches (22) disposées transversalement, dans lesquelles les câbles (20), reliés aux broches de contact (18) sont serrés et guidés vers le ressort à air.

3. Ressort à air selon les revendications 1 ou 2, caractérisé en ce que sur la tête du boîtier (9) s'articule un capuchon de blocage (23) pour la ligne électrique (5), qui passe sur un connecteur (8) de la ligne (5) et qui est placé en correspondance, avec des ergots (2) sur le connecteur (8), qui présente des évidements (25) en forme de fentes et peut être encliqueté dans ceux-ci.

4. Ressort à air selon la revendication 1 ou une ou plusieurs des revendications précédentes, caractérisé en ce que le boîtier (9) et l'insert (12) sont réunis en un seul composant qui est en matière plastique.

5. Ressort à air selon la revendication 1 ou une ou plusieurs des revendications précédentes, caractérisé en ce que seul un raccord d'air (L) avec une conduite (3 ou 4) d'un autre élément de liaison (6 ou 7) est en fonction et l'autre raccord d'air ne présente pas d'orifice de passage (10) ouvert.
